Europäisches Patentamt

European Patent Office

Office européen des brevets

(11) Veröffentlichungsnummer: **0 509 358 A1**

(12) **EUROPÄISCHE PATENTANMELDUNG**

(21) Anmeldenummer: **92105893.9**

(22) Anmeldetag: **06.04.92**

(51) Int. Cl.5: **C08J 11/08**

(30) Priorität: **19.04.91 DE 4112786**

(43) Veröffentlichungstag der Anmeldung:
**21.10.92 Patentblatt 92/43**

(84) Benannte Vertragsstaaten:
**AT BE CH DE DK ES FR GB GR IT LI LU NL SE**

(71) Anmelder: **BAYER AG**

**W-5090 Leverkusen 1 Bayerwerk(DE)**

(72) Erfinder: **Fennhoff, Gerhard, Dr.**
**Buschstrasse 25**
**W-4156 Willich 2(DE)**
Erfinder: **Jakob, Wolfgang, Dipl.-Ing.**
**Am Domacker 81**
**W-4130 Moers(DE)**
Erfinder: **Sander, Hans, Dipl.-Ing.**
**Deswatinesstrasse 79**
**W-4150 Krefeld 1(DE)**

(54) **Verfahren zum Abtrennen von anorganischen Pigmenten aus thermoplastischen Polykondensaten.**

(57) Gegenstand der vorliegenden Erfindung ist ein Verfahren zum Abtrennen von anorganischen Pigmenten aus thermoplastischen Polykondensaten, indem man die Polykondensate in Lösungen überführt und die Pigmente durch Zusatz von Säuren oder deren Salzen abtrennt.

EP 0 509 358 A1

Gegenstand der vorliegenden Erfindung ist ein Verfahren zum Abtrennen von anorganischen Pigmenten aus thermoplastischen Polykondensaten, das dadurch gekennzeichnet ist, daß man die Polykondensate in für sie üblichen Lösungsmitteln löst und vor, während oder nach dem Lösen der Polykondensate wäßrige Lösungen von Mineralsäuren oder von deren Salzen oder wäßrige Lösungen von organischen Säuren oder von deren Salzen in Mengen von 0,005 bis 5 Mol, bezogen auf 100 g Polykondensat, vorzugsweise in Mengen von 0,01 bis 2 Mol, bezogen auf 100 g Polykondensat, zugibt und kräftig rührt, nach dem Lösen der Polykondensate die organische Phase von der wäßrigen Phase trennt, die organische Phase mit Wasser elektrolytfrei wäscht und anschließend in bekannter Weise durch Abtrennen des organischen Lösungsmittels die pigmentfreien Polykondensate isoliert.

Thermoplastische Polykondensate im Sinne der vorliegenden Erfindung sind vorzugsweise thermoplastische, aromatische. Polycarbonate und thermoplastische, aromatische Polyestercarbonate.

Thermoplastische, aromatische Polycarbonate im Sinne der Erfindung sind Polycarbonate, die nach den üblichen, in der Literatur bekannten Methoden aus Diphenolen und Carbonatspendern hergestellt werden (siehe beispielsweise "H. Schnell, Chemistry and Physics of Polycarbonates, Interscience Publishers, New York, 1964", US-Patent 3 028 365 und deutsche Offenlegungsschrift 3 832 396 (Le A 26 344)).

Diphenole für solche Polycarbonate können beispielsweise
Hydrochinone,
Resorcine,
Dihydroxydiphenyle,
Bis-(hydroxyphenyl)alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole,
sowie deren kernalkylierte und kernhalogenierte Verbindungen sein.

Bevorzugte Diphenole sind beispielsweise
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,

1,1-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-3,3,5-trimethylcyclohexan.

Besonders bevorzugte Diphenole sind z.B.:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1 Bis-(4-hydroxyphenyl)-cyclohexan und
1,1-Bis-(4-hydroxyphenyl)-3,3,5-trimethylcyclohexan.

Es können auch beliebige Mischungen der vorgenannten Diphenole verwendet worden sein.

Die Diphenole sind entweder literaturbekannt oder nach bekannten Verfahren herstellbar.

Aromatische Polyestercarbonate im Sinne der Erfindung sind solche, die aus mindestens einem aromatischen Bisphenol, aus mindestens einer aromatischen Dicarbonsäure und aus Kohlensäure aufgebaut sind. Geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Diphenyletherdicarbonsäure, 4,4'-Benzophenondicarbonsäure, 3,4'-Benzophenondicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Die aromatischen Polyestercarbonate können nach Verfahren hergestellt worden sein, wie sie für die Polyestercarbonatherstellung aus der Literatur bekannt sind, so z.B. nach Verfahren in homogener Lösung, nach Schmelzumesterungsverfahren, und nach dem Zweiphasengrenzflächenverfahren (siehe beispielsweise E-OS 0 036 080, US-PS 3 169 121, DE-OS 2 714 544 und deutsche Offenlegungsschrift 3 903 103 (Le A 26 313)).

Die Molekulargewichte $\overline{M}_w$ (Gewichtsmittel) der thermoplastischen Polycarbonate liegen zwischen 15 000 und 20 000, vorzugsweise zwischen 20 000 und 80 000 ermittelt durch Gelpermeationschromatographie.

Die Molekulargewichte $\overline{M}_w$ (Gewichtsmittel) der thermoplastischen Polyestercarbonate liegen zwischen 15 000 und 20 000, vorzugsweise zwischen 20 000 und 80 000, ermittelt durch Gelpermeationschromatographie.

Geeignete Lösungsmittel für die Polykondensate sind halogenierte Alkane und Aromaten wie beispielsweise Monochlormethan, Dichlormethan, Trichlormethan und/oder die Monochlor-, Dichlor-, Trichlor- und Tetrachlorderivate des Ethans und/oder Monochlor-, Dichlor- und Trichlorbenzol, aber auch Monomethyl-, Dimethyl- und/oder Trimethylbenzol, wobei die genannten Methylbenzole bei deren Siedepunkten zu verwenden sind.

Die Menge an Lösungsmittel für das Lösen der zu reinigenden Polykondensate beträgt zwischen 500 ml bis 3000 ml pro 100 g gelöstes Polycarbonat.

Geeignete Mineralsäuren sind beispielsweise Schwefelsäure, Phosphorsäure, Perchlorsäure, Chlorwasserstoffsäure, Bromwasserstoffsäure und Iodwasserstoffsäure.

Geeignete Salze von Mineralsäuren sind Alkalisalze, Erdalkalisalze, Zink-(II)-Salze, Eisen-(III)-Salze, Aluminium-(III)-Salze, Titan-(IV)-Salze und Zinn-(IV)-Salze der obengenannten Mineralsäuren. Besonders bevorzugt sind Eisentrichlorid, Aluminiumtrichlorid und Titantetrachlorid.

Geeignete organische Säuren sind beispielsweise Carbonsäuren und Sulfonsäuren. Von den Carbonsäuren sind besonders bevorzugt Ameisensäure und Essigsäure. Von den Sulfonsäuren ist besodners bevorzugt 4-Toluolsulfonsäure.

Geeignete Salze von organischen Säuren sind Alkalisalze und Erdalkalisalze von Carbonsäuren und Sulfonsäuren. Besondes bevorzugt sind die Alkalisalze und Erdalkalisalze der Ameisensäure, der Essigsäure und der 4-Toluolsulfonsäure.

Die Menge an wäßrigen Lösungen der Säuren bzw. deren Salze zur Bildung der wäßrigen Phase des erfindinngsgemäßen Verfahrens beträgt 0,5 bis 50 Vol.-%, bezogen auf Volumen organische Phase, vorzugsweise zwischen 1,0 bis 30 Vol.-% bezogen auf Volumen organische Phase..

Die Durchführung des Reinigungsverfahrens erfolgt bei Temperaturen von 10°C bis 180°C, vorzugsweise von 15°C bis 40°C.

Der Gehalt an abzutrennenden Pigmenten im Polykondensat liegt zwischen 0,01 und 35 Gew.-%, vorzugsweise zwischen 0,1 und 20 Gew.-%, bezogen auf Gewicht aus Polykondensat und Pigment.

Die Isolierung der abgetrennten, koagulierten Pigmente aus der wäßrigen Phase des erfindungsgemäßen Verfahrens kann erfolgen, indem man die Pigmente nach der Phasenseparierung in der wäßrigen Phase über handelsübliche Filterpapiere und/oder Filterschichten abfiltriert.

Das Koagulieren von anorganischen Pigmenten in wäßrigen Suspensionen ist bekannt und in der Literatur vielfach beschrieben (siehe beispielsweise E. Santaelsaria, M. Tonello, G. Storti, R.C. Pall, S. Carra, J. Colloich Interface Sci., 1986, Bd. 111, Heft 1,SS 44-53; Yn. Ya. Bliyrenko, Kolloid. Zh., 1973, Bd. 35, Heft 2, SS 238-242 und A.J. Khakonoo, S. Konforovich, D.D. Schehukin, Kolloid. Zh., 1973, Bd. 35, Heft 6,SS 1197-1199).

Das Koagulieren anorganischer Pigmente in Polykondensatlösungen ist demgegenüber neu und bislang noch nicht beschrieben.

Polykondensatabfälle enthalten häufig anorganische Pigmente wie beispielsweise Titandioxid. Derartige Pigmente weisen stets sehr geringe Korngrößen auf (im allgemeinen zwischen 0,1 $\mu$m und 1 $\mu$m) und sind deshalb durch Filtrationsmethoden schwer zu entfernen.

Gegenüber dem vorliegenden erfindungsgemäßen Verfahren weisen Filtrationsmethoden jedoch den technischen Nachteil auf, daß die Filterstandzeiten und die Polykondensatdurchsätze pro Zeiteinheit von der Menge der abzutrennenden organischen Pigmente abhängen.

Durch das erfindungsgemäße Verfahren erfolgt die Abtrennung unterschiedlicher Pigmentanteile aus Polykondensaten in relativ kurzen Zeiten.

Das erfindungsgemäße Verfahren ist somit vorteilhaft für die Reinigung und Wiedergewinnung von Polykondensaten aus pigmenthaltigen Polykondensatabfällen gut geeignet.

Die so gereinigten Polykondensatabfälle sind für erneute, technische Verarbeitung zu Formteilen verschiedenster Art geeignet, welche somit erneute technische Verwendung finden können auf den für den Einsatz von thermoplastischen Polykondensaten bekannten Gebieten.

Beispiele:

Für die im folgenden beschriebenen Beispiele wurde Polycarbonat mit 5 Gewichtsprozenten an anorganischen Pigmenten in Form von Titandioxid und einer relativen Lösungsviskosität von 1,279(0,5 g Polycarbonat in 100 ml Dichlormethan bei 23°C, Pigmente zuvor für die Viskositätsbestimmung abfiltriert) verwendet.

Beispiel 1

90 g Polycarbonat werden in 1800 ml Dichlormethan gelöst und mit 600 ml 10 %iger Salzsäurelösung versetzt. Danach rührt man 10 Minuten kräftig, so daß die wäßrige und die organische Phase eine Emulsion bilden. Nach Beendigung des Rührvorganges wartet man die Phasentrennung ab, wobei die anorganischen Pigmente in der wäßrigen Phase verbleiben. Die klare organische Phase wird von der wäßrigen Phase abgetrennt, mit destilliertem Wasser elektrolytfrei gewaschen und das Dichlormethan bei 120°C im Vakuumtrockenschrank entfernt. Das wiedergewonnene, pigmentfreie Polycarbonat hat eine relative Lösungsviskosität von 1,270 (0,5 g Polycarbonat in 100ml Dichlormethan bei 23°C).

Beispiel 2

15 g Polycarbonat werden in 300 ml Dichlormethan gelöst und mit 100 ml 10 %iger Phosphorsäurelösung versetzt. Danach rührt man 10 Minuten kräftig, so daß die wäßrige und die organische Phase eine Emulsion bilden. Nach Beendigung des Rührvorganges wartet man die Phasentrennung ab, wobei die anorganischen Pigmente zum größten Teil in der wäßrigen Phase verbleiben. Die leicht getrübte organische Phase wird von der wäßrigen Phase abgetrennt, mit destilliertem Wasser elektrolytfrei gewaschen, wobei die restlichen Pigmente abgetrennt werden. Das Dichlormethan entfernt man schließlich bei 120°C im Vakuumtrockenschrank. Das wiedergewonnene, pigmentfreie Polycarbonat hat eine relative Lösungsviskosität von 1,279(0,5 g Polycarbonat in 100 ml Dichlormethan bei 23°C).

### Beispiel 3

In 625 ml Dichlormethan und 15 ml 10 %iger Salzsäurelösung werden unter heftigem Rühren 25 g Polycarbonat gelöst Nachdem das gesamte Polycarbonat gelöst ist, beendet man den Rührvorgang, wartet die Phasentrennung ab, wobei die anorganischen Pigmente in der wäßrigen Phase verbleiben und trennt die organische Phase von der wäßrigen Phase ab. Die klare organische Phase wird anschließend mit destilliertem Wasser elektrolytfrei gewaschen und das Dichlormethan bei 120°C im Vakuumtrockenschrank entfernt. Das wiedergewonnene, pigmentfreie Polycarbonat hat eine relative Lösungsviskosität von 1,279(0,5 g Polycaronat in 100 ml Dichlormethan bei 23°C).

### Beispiel 4

In 625 ml Dichlormethan mit 1 g Eisentrichlorid werden unter heftigem Rühren 25 g Polycarbonat gelöst. Nachdem das gesamte Polycarbonat gelöst ist, fügt man 10 ml destilliertes Wasser hinzu, rührt noch 15 Minuten heftig weiter und wartet anschließend die Phasentrennung ab, wobei die anorganischen Pigmente in der wäßrigen Phase verbleiben. Dann trennt man die organische Phase von der wäßrigen Phase ab, wäscht die klare organische Phase mit destilliertem Wasser elektrolytfrei und entfernt das Dichlormethan bei 120°C im Vakuumtrockenschrank. Das wiedergewonnene, pigmentfreie Polycarbonat hat eine relative Lösungsviskosität von 1,279(0,5 g Polycarbonat in 100ml Dichlormethanbei 23°C).

### Beispiel 5

Wie Beispiel 4, aber mit 1 g Aluminiumtrichlorid anstelle des Eisentrichlorids.
Das wiedergewonnene, pigmentfreie Polycarbonat hat eine relative Lösungsviskosität von 1,279(0,5 g Polycarbonat in 100 ml Dichlormethan bei 23°C).

### Beispiel 6

Wie Beispiel 4, aber mit 1 g Titantetrachlorid anstelle des Eisentrichlorids.
Das wiedergewonnene, pigmentfreie Polycarbonat hat eine relative Lösungsviskosität von 1,279(0,5 g Polycarbonat in 100ml Dichlormethan bei 23°C).

### Beispiel 7

Wie Beispiel 4, aber mit 1 g 4-Toluolsulfonsäure anstelle des Eisentrichlorids.
Das wiedergewonnene, pigmentfreie Polycarbonat hat eine relative Lösungsviskosität von 1,279 (0,5 g Polycarbonat in 100 ml Dichlormethan bei 23°C).

## Patentansprüche

1. Verfahren zum Abtrennen von anorganischen Pigmenten aus thermoplastischen Polykondensaten, dadurch gekennzeichnet, daß man die Polykondensate in für sie üblichen Lösungsmitteln löst und vor, während oder nach dem Lösen der Polykondensate wäßrige Lösungen von Mineralsäuren oder von deren Salzen oder wäßrige Lösungen von organischen Säuren oder von deren Salzen in Mengen von 0,005 bis 5 Mol, bezogen auf 100 g Polykondensat, zugibt und kräftig rührt, nach dem Lösen der Polykondensate die organische Phase von der wäßrigen Phase trennt, die organische Phase mit Wasser elektrolytfrei wäscht und anschließend in bekannter Weise durch Abtrennen des organischen Lösungsmittels die pigmentfreien Polykondensate isoliert.

2. Verfahren gemäß Anspruch 1, dadurch gekennzeichnet, daß man die wäßrigen Lösungen von Mineralsäuren oder von deren Salzen oder wäßrige Lösungen von organischen Säuren oder von deren Salzen in Mengen von 0,01 bis 2 Mol, bezogen auf 100 g Polykondensat, zugibt.

**Patentansprüche für folgenden Vertragsstaat : GR**

1. Verfahren zum Abtrennen von anorganischen Pigmenten aus thermoplastischen Polykondensaten, dadurch gekennzeichnet, daß man die Polykondensate in für sie üblichen Lösungsmitteln löst und vor, während oder nach dem Lösen der Polykondensate wäßrige Lösungen von Mineralsäuren oder von deren Salzen oder wäßrige Lösungen von organischen Säuren oder von deren Salzen in Mengen von 0,005 bis 5 Mol, bezogen auf 100 g Polykondensat, zugibt und kräftig rührt, nach dem Lösen der Polykondensate die organische Phase von der wäßrigen Phase trennt, die organische Phase mit Wasser elektrolytfrei wäscht und anschließend in bekannter Weise durch Abtrennen des organischen Lösungsmittels die pigmentfreien Polykondensate isoliert.

2.  Verfahren gemäß Anspruch 1, dadurch gekennzeichnet, daß man die wäßrigen Lösungen von Mineralsäuren oder von deren Salzen oder wäßrige Lösungen von organischen Säuren oder von deren Salzen in Mengen von 0,01 bis 2 Mol, bezogen auf 100 g Polykondensat, zugibt.

**Patentansprüche für folgenden Vertragsstaat : ES**

1.  Verfahren zum Abtrennen von anorganischen Pigmenten aus thermoplastischen Polykondensaten, dadurch gekennzeichnet, daß man die Polykondensate in für sie üblichen Lösungsmitteln löst und vor, während oder nach dem Lösen der Polykondensate wäßrige Lösungen von Mineralsäuren oder von deren Salzen oder wäßrige Lösungen von organischen Säuren oder von deren Salzen in Mengen von 0,005 bis 5 Mol, bezogen auf 100 g Polykondensat, zugibt und kräftig rührt, nach dem Lösen der Polykondensate die organische Phase von der wäßrigen Phase trennt, die organische Phase mit Wasser elektrolytfrei wäscht und anschließend in bekannter Weise durch Abtrennen des organischen Lösungsmittels die pigmentfreien Polykondensate isoliert.

2.  Verfahren gemäß Anspruch 1, dadurch gekennzeichnet, daß man die wäßrigen Lösungen von Mineralsäuren oder von deren Salzen oder wäßrige Lösungen von organischen Säuren oder von deren Salzen in Mengen von 0,01 bis 2 Mol, bezogen auf 100 g Polykondensat, zugibt.

Europäisches Patentamt

**EUROPÄISCHER RECHERCHENBERICHT**

Nummer der Anmeldung

EP     92 10 5893

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X<br>Y | US-A-3 043 785 (P.W. WRIGHT ET AL.)<br><br>* Ansprüche 1,5,6 *<br>* Spalte 1, Zeile 31 - Spalte 1, Zeile 59 *<br>* Spalte 2, Zeile 9 - Spalte 2, Zeile 30 *<br>--- | 1,2<br>1,2 | C08J11/08 |
| Y | CHEMICAL ABSTRACTS, vol. 83, no. 20,<br>17. November 1975, Columbus, Ohio, US;<br>abstract no. 165363X, 'REMOVAL OF INORGANIC MATERIALS FROM PLASTIC WASTES'<br>Seite 60 ;<br>* Zusammenfassung *<br><br>----- | 1,2 | |

**RECHERCHIERTE SACHGEBIETE (Int. Cl.5)**

C08J

Der vorliegende Recherchenbericht wurde für alle Patentansprüche erstellt

| Recherchenort | Abschlußdatum der Recherche | Prüfer |
|---|---|---|
| DEN HAAG | 08 JULI 1992 | HALLEMEESCH A.D |

EPO FORM 1503 03.82 (P0403)